# EUROPÄISCHE PATENTSCHRIFT

(11) **EP 3 013 505 B1**
(45) Veröffentlichungstag und Bekanntmachung des Hinweises auf die Patenterteilung: **09.08.2017**
(21) Anmeldenummer: 14732866.0
(22) Anmeldetag: 23.06.2014
(51) Int. Cl.: B23F 5/22, B23F 19/10, B23F 17/00

(54) **WÄLZFRÄSMASCHINE MIT SCHWENKARM, AN DEM EINE ANFASVORRICHTUNG UND ZWEI SCHNEIDWERKZEUGE ANGEORDNET SIND**
HOBBING MACHINE HAVING A PIVOTING ARM, ON WHICH A CHAMFERING DEVICE AND TWO CUTTING TOOLS ARE ARRANGED
MACHINE À TAILLER PAR FRAISE-MÈRE POURVUE D'UN BRAS PIVOTANT SUR LEQUEL SONT DISPOSÉS UN DISPOSITIF DE CHANFREINAGE ET DEUX OUTILS DE COUPE

(30) Priorität: 27.06.2013 DE 102013212432
(43) Veröffentlichungstag der Anmeldung: 04.05.2016
(73) Patentinhaber: FELSOMAT GmbH & Co. KG, 75203 Königsbach-Stein (DE)
(72) Erfinder: PESCHINA, Jürgen, 75438 Knittlingen (DE)
(74) Vertreter: Kohler Schmid Möbus Patentanwälte
(86) Internationale Anmeldenummer: PCT/EP2014/063093
(87) Internationale Veröffentlichungsnummer: WO 2014/206902

(56) Entgegenhaltungen:
- EP-A2- 0 832 716
- DE-A1-102011 006 993
- US-A1- 2013 047 390

## Beschreibung

Die Erfindung betrifft eine Wälzfräsmaschine, mit
- einer Werkstückspindel zum Rotieren eines Werkstücks um eine Rotationsachse,
- einem Wälzfräskopf zur Wälzfräsbearbeitung des Werkstücks, und
- einer Anfasvorrichtung zum Anfasen des Werkstücks,
wobei an der Wälzfräsmaschine ein Schwenkarm ausgebildet ist, der auf einem Schwenkarmschlitten entlang einer Verfahrrichtung parallel zur Rotationsachse der Werkstückspindel verfahrbar ist, und der um eine parallel zur Verfahrrichtung verlaufende Achse am Schwenkarmschlitten verschwenkbar ist,
und wobei am Schwenkarm die Anfasvorrichtung angeordnet ist.

Eine solche Wälzfräsmaschine ist aus der US 2013/0047390 A1 bekannt geworden.

Durch Wälzfräsen können praktisch beliebige Verzahnungen an Werkstücken, etwa Zahnrädern oder Getrieben, mit hoher Produktivität erzeugt werden. Beim Wälzfräsen können jedoch an den gefertigten Zähnen Materialüberstände und scharfe Kanten entstehen, die üblicherweise durch Nachbearbeitungsverfahren beseitigt werden.

Ein beim Wälzfräsen erzeugter, in axialer Richtung gegenüber den Zähnen des Werkstücks überstehender Grat kann durch ein Schneidwerkzeug abgeschält werden, das an der Stirnseite des Werkstücks geführt wird ("Primärentgraten").

Ein in radialer Richtung gegenüber den Zähnen überstehender Grat oder auch eine scharfe Kante der Zähne wird typsicherweise durch Anfasen beseitigt, wobei ein flaches Anfaswerkzeug an eine abzuflachende Kante des Werkstücks gepresst wird; dabei wird das Material des Werkstücks plastisch verformt, wobei in axialer Richtung und in radialer Richtung merkliche Materialwulste entstehen können. Die axialen Materialwulste können wiederum durch ein Schneidwerkzeug abgeschält werden ("Sekundärentgraten"). Die radialen Materialwulste können, falls gewünscht, durch Feinfräsen beseitigt werden.

Typischerweise findet das Primärentgraten zusammen mit dem Wälzfräsen statt, wohingegen für das Anfasen und Sekundärentgraten das Werkstück auf eine nachfolgende Bearbeitungsstation verbracht wird, vgl. beispielsweise das Firmenprospekt "Gleason Pfauter Hobbing Machines P60 P90", Gleason Pfauter Maschinenfabrik GmbH, Ludwigsburg, DE, Drucklegung 7/2003.

Aus der DE 10 2006 044 738 B3 ist es bekannt geworden, das Anfasen und Sekundärentgraten in der gleichen Aufspannung des Werkstücks, jedoch auf einer gegenüber dem Wälzfräsen verschwenkten Position der zugehörigen Werkstückspindel durchzuführen. Auf einem Drehhalter sind dabei zwei Werkstückspindeln angeordnet, die durch Drehen des Drehhalters zwischen einer Bearbeitungsposition für das Wälzfräsen und einer Transferposition, in der auch das Anfasen und Sekundärentgraten stattfindet, wechseln können. Für das Anfasen und Sekundärentgraten sind dabei auf separaten Schwenkarmen angeordnete Werkzeuge vorgesehen.

Mit der aus der DE 10 2006 044 738 B3 bekannten Vorrichtung ist es möglich, wälzgefräste, angefaste und entgratete Werkstücke bei sehr geringen Nebenzeiten zu fertigen. Nachteilig dabei ist jedoch der relativ große bauliche Aufwand.

Die EP 0 832 716 A2 beschreibt eine Werkzeugmaschine mit einem ersten Schlitten, der einen Werkzeugrevolver trägt, und einem zweiten Schlitten, der einen Wälzfräskopf trägt. Der Werkzeugrevolver kann insbesondere ein Entgratwerkzeug tragen. Die Werkzeugmaschine ist auch zum Anfasen während der Wälzfräsbearbeitung geeignet.

Die US 2013/0047390 A1 offenbart eine multifunktionale modulare Werkzeugmaschine, umfassend eine Verzahnungseinheit und einen Werkzeugrevolver, mit denen an einem Werkstück gleichzeitig ein Verzahnen und ein Anfasen erfolgen kann.

### Aufgabe der Erfindung

Der Erfindung liegt die Aufgabe zugrunde, eine Wälzfräsmaschine bereitzustellen, mit der bei geringem baulichen Aufwand in flexibler Weise wälzgefräste, angefaste und entgratete Werkstücke gefertigt werden können, wobei eine schnelle Entgratung von zwei einander gegenüberliegenden Stirnseiten eines Werkstücks erfolgen kann.

### Kurze Beschreibung der Erfindung

Diese Aufgabe wird gelöst durch eine Wälzfräsmaschine der eingangs genannten Art, die dadurch gekennzeichnet ist, dass am Schwenkarm zwei Schneidwerkzeuge zum Abschälen von Primär- und/oder Sekundärgraten des Werkstücks angeordnet sind, deren Abstand parallel zur Verfahrrichtung verstellbar ist.

Die erfindungsgemäße Wälzfräsmaschine sieht ein integriertes Anfasen und Entgraten vor, d.h. das Anfasen und Entgraten findet auf derselben Werkstückspindel wie das Wälzfräsen statt, ohne die Werkstückspindel nach dem Wälzfräsen zu verfahren. Entsprechend ist die Werkstückspindel insgesamt typischerweise ortsfest ausgebildet, und typischerweise weist die Wälzfräsmaschine auch nur eine einzige Werkstückspindel auf.

Gemäß der Erfindung wird derselbe Schwenkarm sowohl für die Zustellung des Anfaswerkzeugs, als auch für die Zustellung des wenigstens einen Entgratwerkzeugs eingesetzt, was gegenüber separaten Zustellvorrichtungen eine erhebliche Vereinfachung darstellt. Die Verschwenkbewegung des Schwenkarms einzurichten ist zudem baulich einfacher, insbesondere billiger und weniger platzaufwendig, als das Einrichten einer linearen Bewegung auf das Werkstück zu, etwa mit einem Schlitten auf einer Schienenführung.

Zudem ist gemäß der Erfindung der Schwenkarm auf einem Schwenkarmschlitten angeordnet, mit dem parallel zur Rotationsachse der Werkstückspindel eine axiale Ausrichtung sowohl des Anfaswerkzeugs als auch des wenigstens einen Entgratwerkzeugs relativ zum Werkstück durchgeführt werden kann. Dadurch kann die erfindungsgemäße Wälzfräsmaschine sehr einfach mit unterschiedlichen Werkstücktypen verwendet werden. Ebenso kann der Schwenkarm grundsätzlich unabhängig vom Wälzfräskopf bezüglich der Verfahrrichtung positioniert werden.

Mit der erfindungsgemäßen Wälzfräsmaschine kann sehr schnell zwischen einer Anfasbearbeitung und einer Entgratbearbeitung (Primärentgraten und/oder Sekundärentgraten) gewechselt werden, wodurch Nebenzeiten reduziert werden können. Bei geeigneter Anordnung der Werkzeuge kann auch ein gleichzeitiges Anfasen und Entgraten (Sekundärentgraten) eingerichtet werden, was eine besonders rasche Werkstückbearbeitung ermöglicht.

Gemäß der Erfindung sind am Schwenkarm zwei Schneidwerkzeuge angeordnet, deren Abstand parallel zur Verfahrrichtung verstellbar ist. Dadurch kann in schneller Folge oder auch gleichzeitig die Entgratung von zwei einander gegenüberliegenden Stirnseiten eines verzahnten Werkstücks (oder eines axialen Bereichs eines verzahnten Werkstücks) erfolgen. Durch die Verstellbarkeit des Abstands kann eine Anpassung an das jeweilige Werkstück vorgenommen werden. Die Verstellung erfolgt im einfachsten Fall manuell, kann aber auch motorisch automatisiert eingerichtet sein.

### Bevorzugte Ausführungsformen der Erfindung

Besonders bevorzugt ist eine Ausführungsform, bei der die Anfasvorrichtung in Verschwenkrichtung versetzt zu den Schneidwerkzeugen des Schwenkarms angeordnet ist, so dass die Anfasvorrichtung und die Schneidwerkzeuge bei unterschiedlichen Verschwenkwinkeln des Schwenkarms am Werkstück angreifen. Die Verschwenkbewegung des Schwenkarms um seine Achse kann dadurch für eine Auswahl des aktiven Werkzeugs am Schwenkarm eingesetzt werden.

Vorteilhaft ist auch eine Ausführungsform, bei der am Schwenkarm weiterhin ein motorisch angetriebenes Feilwerkzeug angeordnet ist. Dadurch kann der Schwenkarm eine weitere Bearbeitungsfunktion wahrnehmen, und so die Werkstückbearbeitung universeller werden.

Bevorzugt ist auch eine Ausführungsform, bei der die Anfasvorrichtung zwei einander gegenüberliegende Anfasscheiben aufweist, deren Abstand parallel zur Verfahrrichtung verstellbar ist. Mit den beiden Anfasscheiben können gleichzeitig die gegenüberliegenden Kanten eines Werkstücks (bzw. eines axialen Bereichs des Werkstücks) angefast (plastisch eingedrückt) werden. Durch die Verstellbarkeit des Abstands kann eine Anpassung an das jeweils zu fertigende Werkstück auf einfache Weise erfolgen. Die Verstellung erfolgt im einfachsten Fall manuell, kann aber auch motorisch automatisiert eingerichtet sein.

Besonders bevorzugt ist eine Ausführungsform, bei der die Werkstückspindel ortsfest ausgebildet ist. Die Werkstückspindel ist dann insbesondere nicht zusammen mit anderen Werkstückspindeln in einem Drehhalter angeordnet. Dadurch ist der Aufbau der erfindungsgemäßen Wälzfräsmaschine besonders einfach. Alternativ ist es auch möglich, einen Drehhalter mit mehreren Werkstückspindeln vorzusehen, so dass die Werkstückspindeln zwischen verschiedenen Positionen wechseln können.

Bei einer vorteilhaften Ausführungsform verlaufen die Rotationsachse und die Verfahrrichtung horizontal. Bei einem horizontalen Aufbau stellt sich ein günstiger, von der Gewichtskraft unterstützter Spänefluss weg vom Werkstück und weg von der Werkstückspindel ein; heiße Spänenester an der Werkstückspindel, die zu Fertigungsungenauigkeiten führen können, werden vermieden.

Vorteilhaft ist auch eine Ausführungsform, die vorsieht, dass die Wälzfräsmaschine weiterhin wenigstens eine zusätzliche Anfasvorrichtung zum Anfasen des Werkstücks aufweist,
und dass die Wälzfräsmaschine einen gemeinsamen Schlitten aufweist, auf dem sowohl der Wälzfräskopf als auch die wenigstens eine zusätzliche Anfasvorrichtung angeordnet sind, und mit dem der Wälzfräskopf und die wenigstens eine zusätzliche Anfasvorrichtung entlang einer Zusatzverfahrrichtung, die parallel zur Verfahrrichtung verläuft, zusammen verfahren werden können. Das Anfasen findet nach dem Wälzfräsen des Werkstücks statt. Entsprechend kann das Wälzfräswerkzeug während des Anfasens des Werkstücks ohnehin nicht an der Werkstückspindel eingesetzt werden. Die Ausführungsform sieht daher vor, die ohnehin notwendige Verfahrbarkeit des Wälzfräskopfs auf einem Schlitten entlang der Zusatzverfahrrichtung (die parallel zur Rotationsachse der Werkstückspindel verläuft) auch für die zusätzliche Anfasvorrichtung zu nutzen. Eine separate Verfahrbarkeit der zusätzlichen Anfasvorrichtung in Zusatzverfahrrichtung wird in dieser Ausführungsform nicht benötigt. Dies vereinfacht den Aufbau der Wälzfräsmaschine. Dadurch, dass sowohl die Anfasvorrichtung auf dem Schwenkarm als auch die wenigstens eine, zusätzliche Anfasvorrichtung auf dem gemeinsamen Schlitten vorgesehen sind, können in schneller Folge (oder sogar, bei geeigneter Einrichtung der Anfasvorrichtungen, ganz oder teilweise gleichzeitig) zwei oder noch mehr verschiedene axiale Bereiche eines Werkstücks, die mit unterschiedlichen Verzahnungen gefertigt werden, durch Anfasen nachbearbeitet werden. Es ist dafür weder ein Umspannen des Werkstücks noch eine Verstellung einer Anfasvorrichtung notwendig. Man beachte, dass auch mehrere, zusätzliche Anfasvorrichtungen auf dem gemeinsamen Schlitten eingerichtet werden können.

Bei einer vorteilhaften Weiterbildung dieser Ausführungsform ist eine gemeinsamen Zustellvorrichtung vorgesehen, mit der der Wälzfräskopf und die wenigstens eine zusätzliche Anfasvorrichtung in eine Zustellrichtung senkrecht zur Zusatzverfahrrichtung des gemeinsamen Schlittens zusammen verfahrbar sind. Dies ist baulich besonders einfach. Es kann wiederum eine Verfahrbarkeit des Wälzfräskopfs, die ohnehin benötigt wird, für die wenigstens eine zusätzliche Anfasvorrichtung genutzt werden. Dabei kann die gemeinsame Zustellvorrichtung auf dem gemeinsamen Schlitten angeordnet sein oder umgekehrt.

Bevorzugt ist auch eine andere Weiterbildung der obigen Ausführungsform, bei der für den Wälzfräskopf und die wenigstens eine zusätzliche Anfasvorrichtung des gemeinsamen Schlittens jeweils separate Zustellvorrichtungen mit Zustellrichtungen senkrecht zur Zusatzverfahrrichtung des gemeinsamen Schlittens vorgesehen sind. Dadurch können der Wälzfräskopf und die wenigstens eine, zusätzliche Anfasvorrichtung unabhängig voneinander zugestellt werden, was die Werkstückbearbeitung flexibler macht oder auch ein Verbringen des Wälzfräskopfs in eine die Anfasbearbeitung nicht behindernde Stellung erleichtert. Im Falle mehrerer zusätzlicher Anfasvorrichtungen können auch diese eine gemeinsame Zustellvorrichtung haben, und der Wälzfräskopf besitzt eine separate Zustellvorrichtung (in diesem Fall sollte zumindest eine der zusätzlichen Anfasvorrichtungen parallel zur Zustellrichtung auf der gemeinsamen Zustellvorrichtung verstellbar sein); alternativ kann auch jede zusätzliche Anfasvorrichtung eine eigene Zustellvorrichtung haben. Allgemein verlaufen die Zustellrichtung(en) des Wälzfräskopfs und der wenigstens einen zusätzlichen Anfasvorrichtung typischerweise horizontal oder leicht gegen die Horizontale geneigt (etwa bis 25° gegen die Horizontale, beispielsweise bei einem nach hinten um ca. 20°±5° gegen die Horizontale abfallenden Maschinenbett).

Vorteilhaft ist auch eine Weiterbildung, bei der die wenigstens eine zusätzliche Anfasvorrichtung als kombinierte Anfas- und Schneidvorrichtung ausgebildet ist, die auch zum Abschälen von Primär- und/oder Sekundärgraten des Werkstücks ausgebildet ist. Mit einer kombinierten Anfas- und Schneidevorrichtung kann bei geringem baulichem Aufwand und bei keiner oder nur geringer Mehrzeit ein weiterer Bearbeitungsschritt, insbesondere das Sekundärentgraten, mit vollzogen werden. Bei einer kombinierten Anfas- und Schneidevorrichtung ist ein Schneidwerkzeug vorgesehen, das zusammen mit dem Anfaswerkzeug bewegt wird, gegebenenfalls auch auf einer gemeinsamen Zustellvorrichtung. Vorteilhafterweise werden die Anfas- und die Schneidefunktion gleichzeitig eingesetzt. Bevorzugt kann das Anfaswerkzeug oder das Schneidwerkzeug auch mindestens eine eigene (unabhängige) Zustellbewegung ausführen, um eine unabhängige Ausrichtung oder auch eine zeitlich versetzte Benutzung der beiden Werkzeuge zu ermöglichen.

In den Rahmen der vorliegenden Erfindung fällt auch die Verwendung einer erfindungsgemäßen Wälzfräsmaschine zum
a) Wälzfräsen eines Werkstücks mit dem Wälzfräskopf und
b) anschließendem Anfasen des Werkstücks mit dem Anfaswerkzeug des Schwenkarms, und
c) anschließendem oder gleichzeitigem Sekundärentgraten des Werkstücks mit den Schneidwerkzeugen des Schwenkarms,
wobei das Wälzfräsen, Anfasen und Sekundärentgraten in derselben Aufspannung des Werkstücks auf der Werkstückspindel erfolgt. Durch das Wälzfräsen, Anfasen und Sekundärentgraten in derselben Aufspannung ist eine besonders schnelle Gesamtbearbeitung des Werkstücks möglich. Man beachte, dass die Werkstückspindel während der Verwendung typischerweise ortsfest bleibt, und insbesondere nicht mittels eines Drehhalters verschwenkt wird. Typischerweise findet in derselben Aufspannung während Schritt a) auch ein Primärentgraten (also ein Abschälen von axialen Materialüberständen / Primärgraten) statt.

Bei einer vorteilhaften Weiterentwicklung der erfindungsgemäßen Verwendung ist vorgesehen, dass nach dem Sekundärentgraten in derselben Aufspannung des Werkstücks auf der Werkstückspindel weiterhin
d) ein Feinfräsen des Werkstücks mit dem Wälzfräskopf
   erfolgt. Das Feinfräsen verlängert die Gesamtbearbeitungszeit nur geringfügig, weil keine erneute Aufspannung des Werkstück zu erfolgen braucht. Mit dem Feinfräsen können insbesondere radial überstehende Materialwulste beseitigt werden.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen näher erläutert. Es zeigen:
- Fig. 1: eine schematische Schrägansicht auf eine erste Ausführungsform einer erfindungsgemäßen Wälzfräsmaschine;
- Fig. 2a: eine schematische Schrägansicht auf eine zweite Ausführungsform einer erfindungsgemäßen Wälzfräsmaschine, mit zwei zusätzlichen Anfasvorrichtungen, die zusammen mit dem Wälzfräskopf auf einem gemeinsamen Schlitten angeordnet sind;
- Fig. 2b: eine schematische Aufsicht auf die Wälzfräsmaschine von Fig. 2a;
- Fig. 3a: eine schematische seitliche Ansicht eines Schwenkarms mit Anfasvorrichtung und Schneidwerkzeugen, in einer Verschwenkstellung für das Anfasen, für eine erfindungsgemäße Wälzfräsmaschine;
- Fig. 3b: der Schwenkarm von Fig. 3a, in einer schematischen Aufsicht;
- Fig. 4a: eine schematische seitliche Ansicht des Schwenkarms von Fig. 3a, in einer Verschwenkstellung für das Entgraten;
- Fig. 4b: der Schwenkarm von Fig. 4a, in einer schematischen Aufsicht, mit rechtsseitig anliegendem Werkstück;
- Fig. 4c: der Schwenkarm von Fig. 4a, in einer schematischen Aufsicht, mit linksseitig anliegendem Werkstück.

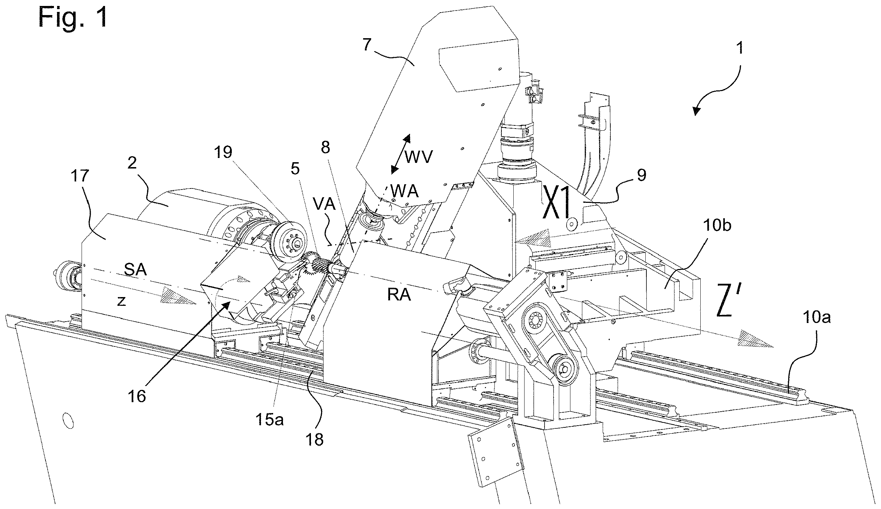

**Fig. 1** zeigt eine erste Ausführungsform einer erfindungsgemäßen Wälzfräsmaschine 1 in einer schematischen Schrägansicht.

Die Wälzfräsmaschine 1 weist eine einzige Werkstückspindel 2 auf, die um eine (hier horizontale) Rotationsachse RA motorisch drehbar ist. Mit einer Spannvorrichtung der Werkstückspindel 2 und einem Reitstock (in Fig. 1 jeweils verdeckt) ist ein Werkstück 5 gehalten, an welchem eine oder mehrere Verzahnungen gefertigt werden.

Die Wälzfräsmaschine 1 umfasst einen Wälzfräskopf 7 mit einem Wälzfräswerkzeug 8. Das Wälzfräswerkzeug 8 ist um eine Werkzeugachse WA rotierbar und um eine Verschwenkachse VA verschwenkbar, wobei die Verschwenkachse VA horizontal und senkrecht zur Rotationsachse RA verläuft. Das Wälzfräswerkzeug 8 ist weiterhin parallel zur Werkzeugachse WA in Richtung WV verfahrbar. Der Wälzfräskopf 7 ist mittels einer Wälzfräs-Zustellvorrichtung 9 in eine (hier horizontale) Zustellrichtung x1 senkrecht zur Rotationsachse RA verfahrbar.

Die Wälzfräs-Zustellvorrichtung 9 ist auf einem Schlitten 10b angeordnet, der in eine Zusatzverfahrrichtung z' parallel zur Rotationsachse RA der Werkstückspindel 2 auf Schienen 10a verfahrbar ist.

Vor der Werkstückspindel 2 ist ein Schwenkarm 16 ausgebildet. Der Schwenkarm 16 ist um eine Achse (Schwenkachse) SA rotierbar, die parallel zur Rotationsachse RA verlauft. Der Schwenkarm 16 ist weiterhin mit einem Schwenkarmschlitten 17 entlang einer Verfahrrichtung z parallel zur Rotationsachse RA auf Schienen 18 verfahrbar.

Am Schwenkarm 16 sind ein Anfaswerkzeug (Anfasvorrichtung) 19, umfassend zwei einander gegenüberliegende und in ihrem Abstand in z-Richtung verstellbare Anfasscheiben, und zwei einander gegenüberliegende und in ihrem Abstand in z-Richtung verstellbare Schneidwerkzeuge angeordnet, umfassend jeweils eine Schneide, wobei in Fig. 1 von den Schneidwerkzeugen nur das der Werkstückspindel 2 abgewandte Schneidwerkzeug 15a zu sehen ist. Die Anpassung der Position bzw. des Abstands der Anfasscheiben und der Schneiden auf dem Schwenkarmschlitten 17 erfolgt typischerweise manuell, kann aber auch motorisch automatisiert eingerichtet werden.

Mit den Schneidwerkzeugen 15a können zeitgleich oder im Anschluss an ein Wälzfräsen am Werkstück 5 Primärgrate an den Stirnseiten des Werkstücks 5 (oder eines verzahnten axialen Bereichs des Werkstücks 5) abgeschält werden. Weiterhin können mit dem Anfaswerkzeug 19 bzw. den Anfasscheiben Kanten des Werkstücks 5 plastisch eingedrückt werden. Zeitgleich oder im Anschluss an das Anfasen können mit den Schneidwerkzeugen 15a Sekundärgrate an den Stirnseiten des Werkstücks 5 (oder eines verzahnten, axialen Bereichs des Werkstücks 5) abgeschält werden. Der Schwenkarm 16 kann dabei unabhängig vom Wälzfräskopf 7 verfahren und eingesetzt werden. Wälzfräsen, Primärentgraten, Anfasen und Sekundärentgraten können dabei zeitsparend in derselben Aufspannung des Werkstücks 5 auf der Werkstückspindel 2 erfolgen.

Falls gewünscht, kann der Schwenkarm 16 zusätzlich zum Anfaswerkzeug 19 und den Schneidwerkzeugen 15a auch weitere Werkzeuge tragen, insbesondere ein Feilwerkzeug (nicht näher dargestellt).

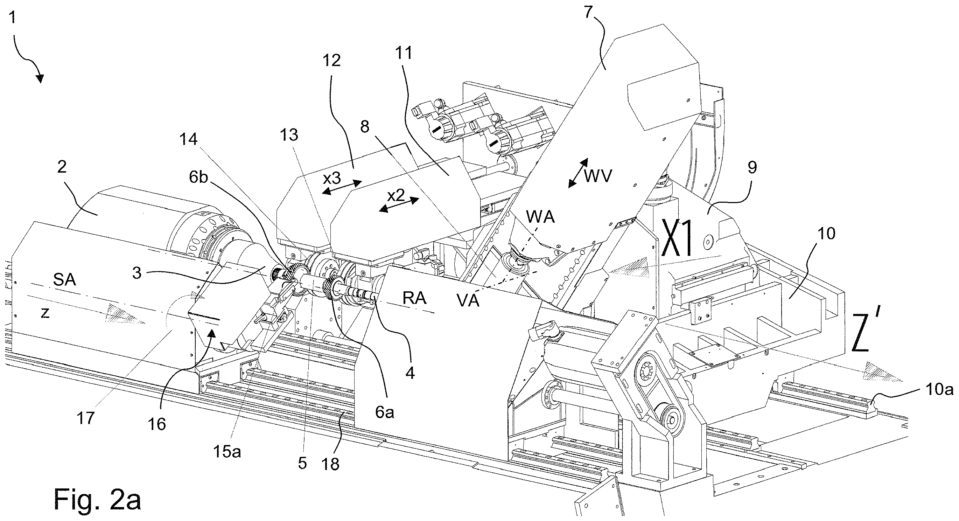

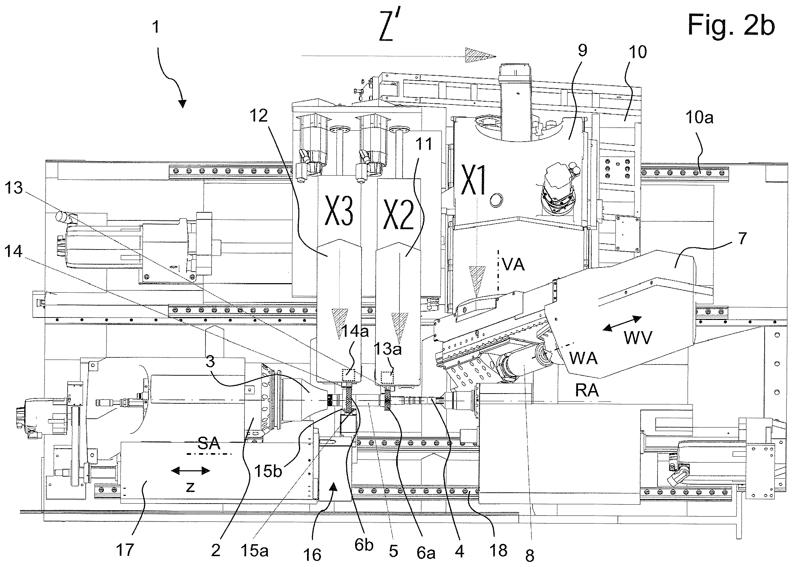

Eine zweite Ausführungsform einer erfindungsgemäßen Wälzfräsmaschine 1 ist in **Fig. 2a** in schematischer Schrägansicht und in **Fig. 2b** in schematischer Aufsicht dargestellt.

Die Wälzfräsmaschine 1 weist wiederum eine einzige Werkstückspindel 2 auf, die um eine (hier horizontale) Rotationsachse RA motorisch drehbar ist. Mit einer Spannvorrichtung 3 der Werkstückspindel 2 und einem Reitstock 4 ist ein Werkstück 5 gehalten, an welchem zwei verschiedene Verzahnungen in einem ersten axialen Bereich 6a und einem zweiten axialen Bereich 6b gefertigt werden.

Die Wälzfräsmaschine 1 umfasst einen Wälzfräskopf 7 mit einem Wälzfräswerkzeug 8. Das Wälzfräswerkzeug 8 ist um eine Werkzeugachse WA rotierbar und um eine Verschwenkachse VA verschwenkbar, wobei die Verschwenkachse VA horizontal und senkrecht zur Rotationsachse RA verläuft. Das Wälzfräswerkzeug 8 ist weiterhin parallel zur Werkzeugachse WA in Richtung WV verfahrbar. Der Wälzfräskopf 7 ist mittels einer Wälzfräs-Zustellvorrichtung 9 in eine (hier horizontale) Zustellrichtung x1 senkrecht zur Rotationsachse RA verfahrbar.

Vor der Werkstückspindel 2 ist ein Schwenkarm 16 mit einer Anfasvorrichtung (zur Vereinfachung nicht in Fig. 2a-2b dargestellt, vgl. aber Fig. 1 oder Fig. 3a-4c) und Schneidwerkzeugen 15a, 15b angeordnet. Der Schwenkarm 16 ist mit einem Schwenkarmschlitten 17 in eine Verfahrrichtung z parallel zur Rotationsachse RA verfahrbar.

Die Wälzfräs-Zustellvorrichtung 9 ist auf einem gemeinsamen Schlitten 10 angeordnet, der in eine Zusatzverfahrrichtung z' parallel zur Rotationsachse RA der Werkstückspindel 2 auf Schienen 10a verfahrbar ist.

Auf dem gemeinsamen Schlitten 10 sind weiterhin eine erste Anfas-Zustellvorrichtung 11 und eine zweite Anfas-Zustellvorrichtung 12 angeordnet. Mit der ersten Anfas-Zustellvorrichtung 11 kann eine erste zusätzliche Anfasvorrichtung (Anfaswerkzeug) 13 in eine (hier horizontale) Zustellrichtung x2 senkrecht zur Zusatzverfahrrichtung z' an das Werkstück 5 in dessen axialem Bereich 6a zugestellt werden. Ebenso kann mit der zweiten Anfas-Zustellvorrichtung 12 eine zweite zusätzliche Anfasvorrichtung (Anfaswerkzeug) 14 in eine (hier horizontale) Zustellrichtung x3 senkrecht zur Zusatzverfahrrichtung z' an das Werkstück 5 in dessen axialem Bereich 6b zugestellt werden.

Die zueinander parallelen Zustellrichtungen (Zustellachsen) x1, x2, x3 der hintereinander angeordneten Werkzeuge 8, 13, 14 können unabhängig voneinander angesteuert werden. Über den gemeinsamen Schlitten 10 können die Werkzeuge 8, 13, 14 in der Zusatzverfahrrichtung z' zusammen positioniert werden.

Die zusätzlichen Anfasvorrichtungen 13, 14 umfassen hier jeweils zwei einander gegenüberliegende Anfasscheiben, wie in Fig. 2a erkannt werden kann. Die zusätzlichen Anfasvorrichtungen 13, 14 können auf ihrer jeweils zugehörigen Anfas-Zustellvorrichtung 11, 12 in ihrer Position in z'-Richtung und auch in ihrer Weite (Abstand der gegenüberliegenden Anfasscheiben in z'-Richtung) verstellt werden, um eine Anpassung an das Werkstück 5 vorzunehmen; die Anpassung erfolgt typischerweise manuell, kann aber auch motorisch automatisiert eingerichtet werden. Man beachte, dass auf den Anfas-Zustellvorrichtungen 11, 12 auch zusätzlich Schneidwerkzeuge 13a, 14a vorgesehen sein können, um so jeweils kombinierte Anfas- und Schneidwerkzeuge auf den Anfas-Zustellvorrichtungen 11, 12 zu erhalten (gepunktet eingezeichnet in Fig. 2b). Alternativ können die zusätzlichen Schneidwerkzeuge 13a, 14a auch direkt auf dem gemeinsamen Schlitten 10 vorgesehen sein. Die zusätzlichen Schneidwerkzeuge 13a, 14a können zum Abschälen von axialen Überständen (Primärgraten und/oder Sekundärgraten) eingesetzt werden.

In der in den Figuren 2a und 2b gezeigten Situation ist das Wälzfräsen in den axialen Bereichen 6a, 6b des Werkstücks 5 bereits abgeschlossen, und das Anfasen zumindest eines der axialen Bereiche 6a, 6b (und bevorzugt beider axialer Bereiche 6a, 6b) findet simultan mit den zusätzlichen Anfasvorrichtungen 13, 14 statt.

Am axialen Bereich 6b findet hier zeitgleich zum Anfasen mit der zusätzlichen Anfasvorrichtung 14 auch ein Sekundärentgraten mit Schneidwerkzeugen 15a, 15b statt, die am Schwenkarm 16 angeordnet ist. Die Schneidwerkzeuge 15a, 15b umfassen hier zwei einander gegenüberliegende Schneiden, deren Abstand (in z) zur Anpassung an das Werkstück 5 bezüglich der z-Richtung verstellbar ist; die Anpassung der Schneidwerkzeuge 15a, 15b erfolgt typischerweise manuell, kann aber auch motorisch automatisiert eingerichtet werden.

Der Schwenkarm 16 ist um eine Achse (Schwenkachse) SA rotierbar, die parallel zur Rotationsachse RA verlauft. Der Schwenkarm 16 ist weiterhin mit dem Schwenkarmschlitten 17 entlang der Verfahrrichtung z parallel zur Rotationsachse RA auf Schienen 18 verfahrbar.

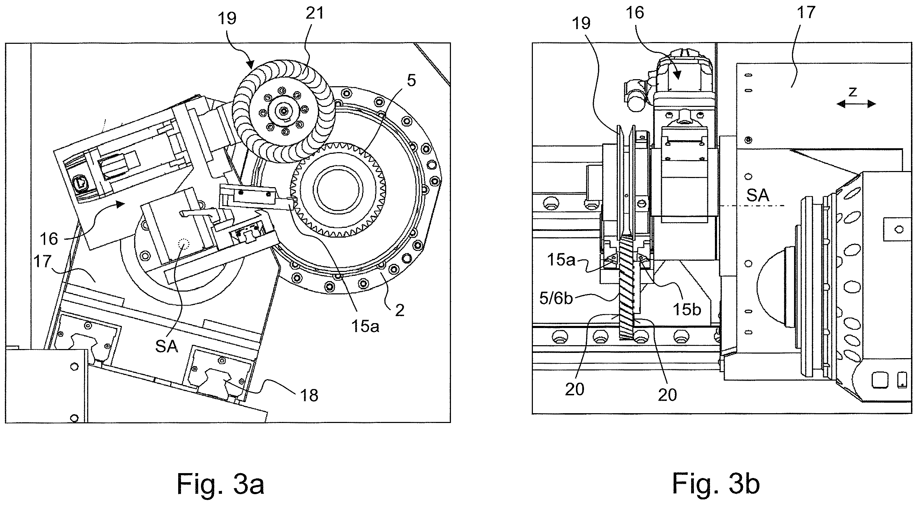

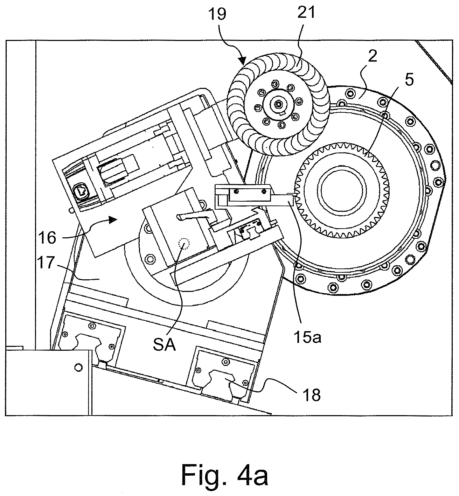

Falls gewünscht, kann der Schwenkarm 16 zusätzlich zu den Schneidwerkzeugen 15a, 15b und der (nicht dargestellten) Anfasvorrichtung auch ein oder mehrere weitere Werkzeuge tragen, insbesondere ein motorisch angetriebenes Feilwerkzeug (siehe dazu auch Fig. 3a und Fig. 4a).

Der Bereich eines Schwenkarms 16 für die Erfindung, wie er beispielsweise in den Wälzfräsmaschinen von Fig. 1 oder Fig. 2a-2b eingesetzt werden kann, ist in **Fig. 3a** in einer Seitenansicht und **Fig. 3b** in einer Aufsicht jeweils schematisch dargestellt.

Bei dem in Fig. 3a und Fig. 3b dargestellten Verschwenkwinkel des Schwenkarms 16 bezüglich der Achse (Schwenkachse) SA greift die Anfasvorrichtung (Anfaswerkzeug) 19 gerade mit zwei Anfasscheiben am Werkstück 5 bzw. dessen axialem Bereich 6b (vgl. etwa Fig. 2a) an, um ein Anfasen (plastisches Eindrücken) der Kanten 20 der Zähne des Werkstücks 5 schräg nach innen zu bewirken. Die Schneidwerkzeuge 15a, 15b sind hingegen nicht in einer für eine Bearbeitung geeigneten Position, und liegen im Übrigen auch aufgrund der Position des Schwenkarmschlittens 17 bezüglich z nicht am Werkstück 5 an.

Nach Abschluss des Anfasens wird der Schwenkarm 16 geringfügig um die Schwenkachse SA nach oben (in Fig. 3a gegen den Uhrzeigersinn) geschwenkt, wobei die Anfasvorrichtung 19 mit dem Werkstück 5 außer Eingriff tritt, und die Schneidwerkzeuge 15a, 15b werden bezüglich ihrer Verschwenklage um die Achse SA in eine für eine Bearbeitung geeignete Position verbracht, vgl. die Seitenansicht von **Fig. 4a**.

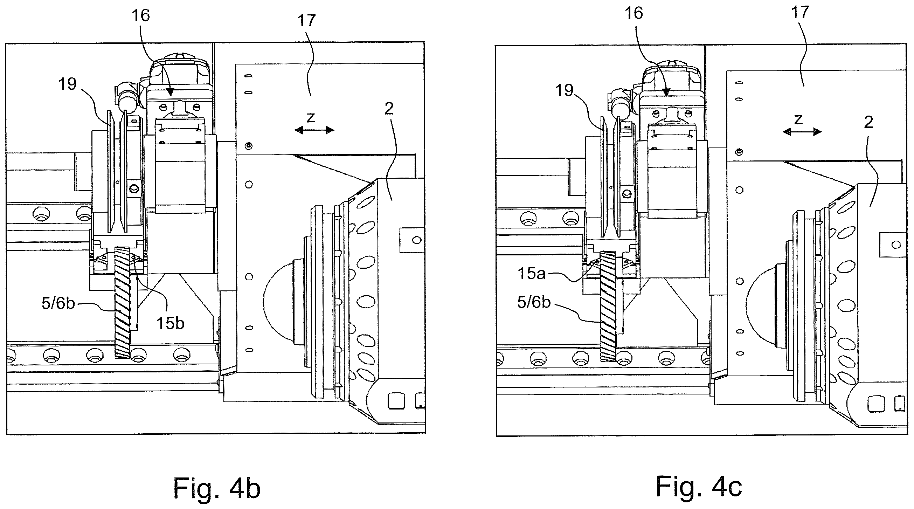

Weiterhin wird der Schwenkarmschlitten 17 geringfügig von der Werkstückspindel 2 weg (in Fig. 3b nach links) verfahren, so dass das werkstückspindelnahe Schneidwerkzeug 15b am Werkstück 5 zur Anlage kommt, wie in **Fig. 4b** ersichtlich. Das Schneidwerkzeug 15b kann dann Sekundärgrate von der werkstückspindelnahen Stirnseite des Werkstücks 5 bzw. dessen axialem Bereich 6b abschälen.

Anschließend kann der Schwenkarmschlitten 17 geringfügig auf die Werkstückspindel 2 zu verfahren werden, so dass das werkstückspindelferne Schneidwerkzeug 15a am Werkstück 5 zu Anlage kommt, wie in Fig. 4c dargestellt. Das Schneidwerkzeug 15a kann dann an der anderen, werkstückspindelfernen Stirnseite des Werkstücks 5 bzw. dessen axialem Bereich 6b die Sekundärgrate abschälen.

Die Verfahrrichtung z bzw. der Schwenkarmschlitten 17 kann damit zum Zustellen der Schneidwerkzeuge 15a, 15b eingesetzt werden; hierbei sollte der Abstand der Schneidwerkzeuge 15a, 15b allerdings größer als die Höhe (in z) des Werkstücks 5 bzw. dessen zu bearbeitendem axialen Bereich 6b gewählt werden.

In Fig. 3a und Fig. 4a ebenfalls zu erkennen ist ein Feilwerkzeug 21, das Feilflächen außenseitlich auf den Anfasscheiben der Anfasvorrichtung 19 ausbildet, und bei geeigneter Positionierung des Schwenkarms 16 und des Schwenkarmschlittens 17 am Werkstück 5 eingesetzt werden kann.

Im Allgemeinen beginnt eine Werkstückbearbeitung auf einer erfindungsgemäßen Wälzfräsmaschine 1, wie sie etwa in Fig. 1 dargestellt ist, zunächst mit der Wälzfräsbearbeitung des Werkstücks 5. Hierfür wird der Schlitten 10, 10b so positioniert, dass das Wälzfräswerkzeug 8 des Wälzfräskopfs 7 einen axialen Bereich des Werkstücks 5 bearbeiten kann. Zeitgleich können entstehende axial überstehende Grate am Werkstück 5 mit den Schneidwerkzeugen 15a, 15b am Schwenkarm 16 entfernt werden (Primärentgraten). Falls gewünscht, kann der Schlitten 10, 10b sodann umpositioniert werden, so dass ein weiterer axialer Bereich 6a, 6b des Werkstücks 5 mit dem Wälzfräswerkzeug 8 bearbeitet (und primärentgratet) werden kann.

Sodann erfolgt das Anfasen und Entgraten. Im Allgemeinen wird dafür der Wälzfräskopf zurückgezogen, und der Schwenkarm 16 wird an das Werkstück 5 bzw. den nachzubearbeitenden axialen Bereich herangeschwenkt, so dass die Anfasvorrichtung 19 auf dem Schwenkarm 16 mit dem Werkstück 5 in Kontakt kommt. Gleichzeitig oder anschließend kann mit den Schneidwerkzeugen 15a, 15b auf dem Schwenkarm 16 ein Abschälen von axial überstehenden Materialwülsten erfolgen (Sekundärentgraten). Falls gewünscht, kann sodann der Schwenkarmschlitten 17 umpositioniert werden, so dass ein weiterer axialer Bereich 6a, 6b des Werkstücks 5 angefast und entgratet werden kann.

Optional kann anschließend noch ein Feinfräsen des Werkstücks 5 erfolgen, wofür der zu bearbeitende axiale Bereich 6a, 6b des Werkstücks 5 nochmals mit dem Wälzfräswerkzeug 8 bearbeitet wird. Falls gewünscht, kann sodann auch weiterer axialer Bereich 6a, 6b durch Feinfräsen nachbearbeitet werden.

Alternativ ist es auch möglich, einen einzelnen axialen Bereich zunächst vollständig durch aufeinanderfolgendes Wälzfräsen, Anfasen, Entgraten und optional Feinfräsen zu bearbeiten, und anschließend einen nächsten axialen Bereich vollständig durch aufeinanderfolgendes Wälzfräsen, Anfasen, Entgraten und optional Feinfräsen zu bearbeiten.

Für all diese Bearbeitungen braucht das Werkstück 5 nicht umgespannt zu werden, sondern kann in der rotierenden Werkstückspindel 2 ortsfest gehalten werden.

Man beachte, dass eine erfindungsgemäße Wälzfräsmaschine 1 für die Fertigung komplizierterer Werkstücke 5, etwa mit zwei, drei oder noch mehr axialen Bereichen mit unterschiedlichen Verzahnungen, auch mit einer oder mehreren, zusätzlichen Anfasvorrichtungen, insbesondere auf einem gemeinsamen Schlitten mit dem Wälzfräskopf, versehen sein kann.

Im Übrigen verfügt der Wälzfräskopf über die für eine Wälzfräsbearbeitung üblichen Achsen, insbesondere zur Verschwenkung des Wälzfräswerkzeugs um eine Verschwenkachse, die senkrecht zur Rotationsachse der Werkstückspindel verlauft, zum Rotieren des Wälzfräswerkzeugs um eine Werkzeugachse, die senkrecht zur Verschwenkachse verlauft, und zum Verfahren des Wälzfräswerkzeugs parallel zur Werkzeugachse. Die Zustellrichtung des Wälzfräskopfs verläuft typischerweise horizontal.

## Patentansprüche

1. Wälzfräsmaschine (1), mit
- einer Werkstückspindel (2) zum Rotieren eines Werkstücks (5) um eine Rotationsachse (RA),
- einem Wälzfräskopf (7) zur Wälzfräsbearbeitung des Werkstücks (5), und
- einer Anfasvorrichtung (19) zum Anfasen des Werkstücks (5),
wobei an der Wälzfräsmaschine (1) ein Schwenkarm (16) ausgebildet ist, der auf einem Schwenkarmschlitten (17) entlang einer Verfahrrichtung (z) parallel zur Rotationsachse (RA) der Werkstückspindel (2) verfahrbar ist, und der um eine parallel zur Verfahrrichtung (z) verlaufende Achse (SA) am Schwenkarmschlitten (17) verschwenkbar ist,
und wobei am Schwenkarm (16) die Anfasvorrichtung (19) angeordnet ist,
**dadurch gekennzeichnet,**
**dass** am Schwenkarm (16) zwei Schneidwerkzeuge (15a, 15b) zum Abschälen von Primär- und/oder Sekundärgraten des Werkstücks (5) angeordnet sind, deren Abstand parallel zur Verfahrrichtung (z) verstellbar ist.

2. Wälzfräsmaschine (1) nach Anspruch 1, **dadurch gekennzeichnet, dass** eine motorisch automatisierte Verstellung des Abstands der Schneidwerkzeuge (15a, 15b) eingerichtet ist.

3. Wälzfräsmaschine (1) nach Anspruch 1 oder 2, **dadurch gekennzeichnet, dass** die Anfasvorrichtung (19) in Verschwenkrichtung versetzt zu den Schneidwerkzeugen (15a, 15b) des Schwenkarms (16) angeordnet ist, so dass die Anfasvorrichtung (19) und die Schneidwerkzeuge (15a, 15b) bei unterschiedlichen Verschwenkwinkeln des Schwenkarms (16) am Werkstück (5) angreifen.

4. Wälzfräsmaschine (1) nach einem der vorhergehenden Ansprüche, **dadurch gekennzeichnet, dass** am Schwenkarm (16) weiterhin ein motorisch angetriebenes Feilwerkzeug (21) angeordnet ist.

5. Wälzfräsmaschine (1) nach einem der vorhergehenden Ansprüche, **dadurch gekennzeichnet, dass** die Anfasvorrichtung (19) zwei einander gegenüberliegende Anfasscheiben aufweist, deren Abstand parallel zur Verfahrrichtung (z) verstellbar ist.

6. Wälzfräsmaschine (1) nach einem der vorhergehenden Ansprüche, **dadurch gekennzeichnet, dass** die Werkstückspindel (2) ortsfest ausgebildet ist.

7. Wälzfräsmaschine (1) nach einem der vorhergehenden Ansprüche, **dadurch gekennzeichnet, dass** die Rotationsachse (RA) und die Verfahrrichtung (z) horizontal verlaufen.

8. Wälzfräsmaschine (1) nach einem der vorhergehenden Ansprüche, **dadurch gekennzeichnet, dass** die Wälzfräsmaschine (1) weiterhin wenigstens eine zusätzliche Anfasvorrichtung (13, 14) zum Anfasen des Werkstücks (5) aufweist,
und dass die Wälzfräsmaschine (1) einen gemeinsamen Schlitten (10) aufweist, auf dem sowohl der Wälzfräskopf (7) als auch die wenigstens eine zusätzliche Anfasvorrichtung (13, 14) angeordnet sind, und mit dem der Wälzfräskopf (7) und die wenigstens eine zusätzliche Anfasvorrichtung (13, 14) entlang einer Zusatzverfahrrichtung (z'), die parallel zur Verfahrrichtung (z) verläuft, zusammen verfahren werden können.

9. Wälzfräsmaschine nach Anspruch 8, **dadurch gekennzeichnet, dass** eine gemeinsame Zustellvorrichtung vorgesehen ist, mit der der Wälzfräskopf (7) und die wenigstens eine zusätzliche Anfasvorrichtung (13, 14) in eine Zustellrichtung (x) senkrecht zur Zusatzverfahrrichtung (z') des gemeinsamen Schlittens (10) zusammen verfahrbar sind.

10. Wälzfräsmaschine (1) nach Anspruch 8, **dadurch gekennzeichnet, dass** für den Wälzfräskopf (7) und die wenigstens eine zusätzliche Anfasvorrichtung (13, 14) des gemeinsamen Schlittens (10) jeweils separate Zustellvorrichtungen (11, 12, 9) mit Zustellrichtungen (x1, x2, x3) senkrecht zur Zusatzverfahrrichtung (z') des gemeinsamen Schlittens (10) vorgesehen sind.

11. Wälzfräsmaschine (1) nach einem der Ansprüche 8 bis 10, **dadurch gekennzeichnet, dass** die wenigstens eine zusätzliche Anfasvorrichtung (13, 14) als kombinierte Anfas- und Schneidvorrichtung ausgebildet ist, die auch zum Abschälen von Primär- und/oder Sekundärgraden des Werkstücks (5) ausgebildet ist

12. Wälzfräsmaschine (1) nach einem der vorhergehenden Ansprüche, **dadurch gekennzeichnet, dass** die Wälzfräsmaschine (1) nur eine einzige, ortsfeste Werkstückspindel (2) für die Wälzfräsbearbeitung, das Anfasen und das Abschälen von Primär- und/oder Sekundärgraten des Werkstücks (5) aufweist.

13. Verwendung einer Wälzfräsmaschine (1) nach einem der vorhergehenden Ansprüche zum
a) Wälzfräsen eines Werkstücks (5) mit dem Wälzfräskopf (7) und
b) anschließendem Anfasen des Werkstücks (5) mit dem Anfaswerkzeug (19) des Schwenkarms (16), und
c) anschließendem oder gleichzeitigem Sekundärentgraten des Werkstücks (5) mit den Schneidwerkzeugen (15a, 15b) des Schwenkarms (16).
wobei das Wälzfräsen, Anfasen und Sekundärentgraten in derselben Aufspannung des Werkstücks (5) auf der Werkstückspindel (2) erfolgt.

14. Verwendung nach Anspruch 13, **dadurch gekennzeichnet, dass** nach dem Sekundärentgraten in derselben Aufspannung des Werkstücks (5) auf der Werkstückspindel (2) weiterhin
d) ein Feinfräsen des Werkstücks (5) mit dem Wälzfräskopf (7) erfolgt.

## Claims

1. Hobbing machine (1), comprising:
- a workpiece spindle (2) for rotating a workpiece (5) about an axis of rotation (RA),
- a hobbing head (7) for hobbing the workpiece (5),
and
- a chamfering device (19) for chamfering the workpiece (5),
wherein a pivot arm (16) is formed on the hobbing machine (1), the pivot arm being movable on a pivot arm carriage (17) along a direction of movement (z) parallel with respect to the axis of rotation (RA) of the workpiece spindle (2) and being pivotable on the pivot arm carriage (17) about an axis (SA) which extends parallel with respect to the direction of movement (z),
and wherein the chamfering device (19) is arranged on the pivot arm (16); **characterized in that**
two cutting tools (15a, 15b) are arranged on the pivot arm (16) for peeling primary and/or secondary burrs off the workpiece (5), the distance between which can be adjusted parallel with respect to the direction of movement (z).

2. Hobbing machine (1) according to claim 1, **characterized in that** a motor-driven automated adjustment of the distance between the cutting tools (15a, 15b) is provided.

3. Hobbing machine (1) according to claim 1 or 2, **characterized in that** the chamfering device (19) is arranged such that it is offset in the pivot direction with respect to the cutting tools (15a, 15b) of the pivot arm (16) such that the chamfering device (19) and the cutting tools (15a, 15b) engage the workpiece (5) at different pivot angles of the pivot arm (16).

4. Hobbing machine (1) according to any one of the preceding claims, **characterized in that** a motor-driven filing tool (21) is furthermore arranged on the pivot arm (16).

5. Hobbing machine (1) according to any one of the preceding claims, **characterized in that** the chamfering device (19) comprises two opposite chamfering discs, the distance between which can be adjusted parallel with respect to the direction of movement (z).

6. Hobbing machine (1) according to any one of the preceding claims, **characterized in that** the workpiece spindle (2) is stationary.

7. Hobbing machine (1) according to any one of the preceding claims, **characterized in that** the axis of rotation (RA) and the direction of movement (z) extend in a horizontal direction.

8. Hobbing machine (1) according to any one of the preceding claims, **characterized in that** the hobbing machine (1) furthermore comprises at least one additional chamfering device (13, 14) for chamfering the workpiece (5), and that the hobbing machine (1) comprises a common carriage (10) on which both the hobbing head (7) as well as the at least one additional chamfering device (13, 14) are arranged, and by means of which the hobbing head (7) and the at least one additional chamfering device (13, 14) can be moved together along an additional direction of movement (z') which extends parallel with respect to the direction of movement (z).

9. Hobbing machine according to claim 8, **characterized in that** a common feed device is provided by means of which the hobbing head (7) and the at least one additional chamfering device (13, 14) can be moved together in a feed direction (x) perpendicular to the additional direction of movement (z') of the common carriage (10).

10. Hobbing machine (1) according to claim 8, **characterized in that** separate feed devices (11, 12, 9) with feed directions (x1, x2, x3) perpendicular to the additional direction of movement (z') of the common carriage (10) are provided each for the hobbing head (7) and the at least one additional chamfering device (13, 14) of the common carriage (10).

11. Hobbing machine (1) according to any one of the claims 8 to 10, **characterized in that** the at least one additional chamfering device (13, 14) is designed as combined chamfering and cutting device which is also designed to peel primary and/or secondary burrs off the workpiece (5).

12. Hobbing machine (1) according to anyone of the preceding claims, **characterized in that** the hobbing machine (1) comprises only one single stationary workpiece spindle (2) for hobbing, chamfering and peeling primary and/or secondary burrs off the workpiece (5).

13. The use of a hobbing machine (1) according to anyone of the preceding claims for
a) hobbing a workpiece (5) using the hobbing head (7) and
b) subsequent chamfering of the workpiece (5) with the chamfering tool (19) of the pivot arm (16), and
c) subsequent or simultaneous secondary deburring of the workpiece (5) using the cutting tools (15a, 15b) of the pivot arm (16),
wherein hobbing, chamfering and secondary deburring is carried out with the workpiece (5) in the same clamping setup on the workpiece spindle (2).

14. The use according to claim 13, **characterized in that** after secondary deburring with the workpiece (5) in the same clamping setup on the workpiece spindle (2), there furthermore follows
c) precision milling of the workpiece (5) using the hobbing head (7).

## Revendications

1. Machine (1) de taillage par fraise-mère, comprenant
- une broche (2) porte-pièces, conçue pour faire tourner une pièce à usiner (5) autour d'un axe de rotation (RA),
- une tête (7) de taillage par fraise-mère, dévolue à l'usinage de ladite pièce (5) par taillage à la fraise-mère, et
- un dispositif de chanfreinage (19) conçu pour chanfreiner ladite pièce à usiner (5),
sachant qu'un bras pivotant (16), ménagé sur ladite machine (1) de taillage par fraise-mère, peut être déplacé sur un chariot (17) le long d'une direction de déplacement (z), parallèlement à l'axe de rotation (RA) de la broche (2) porte-pièces, et peut pivoter sur ledit chariot (17), autour d'un axe (SA) s'étendant parallèlement à ladite direction de déplacement (z),
et sachant que ledit dispositif de chanfreinage (19) est implanté sur ledit bras pivotant (16),
**caractérisée par le fait**
**que** deux outils de coupe (15a, 15b), dont l'espacement peut être réglé parallèlement à la direction de déplacement (z), sont installés sur le bras pivotant (16) en vue d'enlever des bavures primaires et/ou secondaires de la pièce à usiner (5).

2. Machine (1) de taillage par fraise-mère, selon la revendication 1, **caractérisée par** l'instauration d'un réglage, à automatisation motorisée, de l'espacement des outils de coupe (15a, 15b).

3. Machine (1) de taillage par fraise-mère, selon la revendication 1 ou 2, **caractérisée par le fait que** le dispositif de chanfreinage (19) occupe, dans la direction du pivotement, une position décalée par rapport aux outils de coupe (15a, 15b) du bras pivotant (16), de telle sorte que ledit dispositif de chanfreinage (19), et lesdits outils de coupe (15a, 15b), viennent en prise avec la pièce à usiner (5) en présence de différents angles de pivotement dudit bras pivotant (16).

4. Machine (1) de taillage par fraise-mère, selon l'une des revendications précédentes, **caractérisée par le fait qu'**un outil de limage (21), à entraînement motorisé, est par ailleurs installé sur le bras pivotant (16).

5. Machine (1) de taillage par fraise-mère, selon l'une des revendications précédentes, **caractérisée par le fait que** le dispositif de chanfreinage (19) comporte deux disques de chanfreinage placés en vis-à-vis, dont l'espacement peut être réglé parallèlement à la direction de déplacement (z).

6. Machine (1) de taillage par fraise-mère, selon l'une des revendications précédentes, **caractérisée par le fait que** la broche (2) porte-pièces est de réalisation stationnaire.

7. Machine (1) de taillage par fraise-mère, selon l'une des revendications précédentes, **caractérisée par le fait que** l'axe de rotation (RA) et la direction de déplacement (z) s'étendent horizontalement.

8. Machine (1) de taillage par fraise-mère, selon l'une des revendications précédentes, **caractérisée par le fait que** ladite machine (1) de taillage par fraise-mère présente, en outre, au moins un dispositif additionnel de chanfreinage (13, 14) conçu pour chanfreiner la pièce à usiner (5) ;
et **par le fait que** ladite machine (1) de taillage par fraise-mère comporte un chariot commun (10) sur lequel sont implantés, à la fois, la tête (7) de taillage par fraise-mère et le dispositif additionnel de chanfreinage (13, 14) à présence minimale, et sur lequel ladite tête (7) de taillage par fraise-mère, et ledit dispositif additionnel de chanfreinage (13, 14) à présence minimale, peuvent être déplacés conjointement le long d'une direction de déplacement additionnel (z') s'étendant parallèlement à la direction de déplacement (z).

9. Machine (1) de taillage par fraise-mère, selon la revendication 8, **caractérisée par** la présence d'un dispositif commun de pilotage par lequel la tête (7) de taillage par fraise-mère, et le dispositif additionnel de chanfreinage (13, 14) à présence minimale, peuvent être déplacés conjointement dans une direction d'avance (x) perpendiculairement à la direction de déplacement additionnel (z') du chariot commun (10).

10. Machine (1) de taillage par fraise-mère, selon la revendication 8, **caractérisée par le fait que** des dispositif de pilotage (11, 12, 9) distincts, présentant des directions d'avance (x1, x2, x3) perpendiculaires à la direction de déplacement additionnel (z') du chariot commun (10), sont respectivement prévus pour la tête (7) de taillage par fraise-mère et pour le dispositif additionnel de chanfreinage (13, 14) à présence minimale sur ledit chariot commun (10).

11. Machine (1) de taillage par fraise-mère, selon l'une des revendications 8 à 10, **caractérisée par le fait que** le dispositif additionnel de chanfreinage (13, 14), à présence minimale, est réalisé sous la forme d'un dispositif combiné de chanfreinage et de coupe, également conçu en vue d'enlever des bavures primaires et/ou secondaires de la pièce à usiner (5).

12. Machine (1) de taillage par fraise-mère, selon l'une des revendications précédentes, **caractérisée par le fait que** ladite machine (1) de taillage par fraise-mère est équipée d'une seule et unique broche stationnaire (2) porte-pièces, affectée à l'usinage par taillage à la fraise-mère, au chanfreinage et à l'enlèvement de bavures primaires et/ou secondaires de la pièce à usiner (5).

13. Utilisation d'une machine (1) de taillage par fraise-mère conforme à l'une des revendications précédentes, en vue
a) du taillage par fraise-mère de la pièce à usiner (5), à l'aide de la tête (7) de taillage par fraise-mère,
b) du chanfreinage consécutif de ladite pièce à usiner (5), à l'aide de l'outil de chanfreinage (19) du bras pivotant (16), et
c) de l'ébavurage secondaire consécutif ou simultané de ladite pièce à usiner (5), à l'aide des outils de coupe (15a, 15b) dudit bras pivotant (16),
sachant que ledit taillage par fraise-mère, ledit chanfreinage et ledit ébavurage secondaire s'opèrent au cours du même ablocage de ladite pièce à usiner (5) sur la broche (2) porte-pièces.

14. Utilisation selon la revendication 13, **caractérisée par le fait qu'**à l'issue de l'ébavurage secondaire au cours du même ablocage de la pièce à usiner (5) sur la broche (2) porte-pièces, il s'opère en outre
d) un fraisage fin de ladite pièce à usiner (5), à l'aide de la tête (7) de taillage par fraise-mère.
